(19) Europäisches Patentamt
European Patent Office
Office européen des brevets

(11) Veröffentlichungsnummer: **0 217 239 B1**

(12) # EUROPÄISCHE PATENTSCHRIFT

(45) Veröffentlichungstag der Patentschrift: **24.10.90**

(51) Int. Cl.[5]: **C07C 69/92**, C07C 69/76, C09K 19/58

(21) Anmeldenummer: **86112903.9**

(22) Anmeldetag: **18.09.86**

(54) **Chirale Phenolester mesogener Carbonsäuren und ihre Verwendung als Dotierstoff in Flüssigkristal-Phasen.**

(30) Priorität: **30.09.85 DE 3534780**
**17.02.86 DE 3604901**

(43) Veröffentlichungstag der Anmeldung:
**08.04.87 Patentblatt 87/15**

(45) Bekanntmachung des Hinweises auf die Patenterteilung:
**24.10.90 Patentblatt 90/43**

(84) Benannte Vertragsstaaten:
**CH DE FR GB LI**

(56) Entgegenhaltungen:
**EP-A- 0 138 006**
**GB-A- 1 603 075**

(73) Patentinhaber: **HOECHST AKTIENGESELLSCHAFT, Postfach 80 03 20, D-6230 Frankfurt am Main 80(DE)**

(72) Erfinder: **Heppke, Gerd, Prof. Dr., Johann-Georg-Strasse 3, D-1000 Berlin 31(DE)**
Erfinder: **Lötzsch, Detlef, Lessingstrasse 10, D-1000 Berlin 21(DE)**
Erfinder: **Oestreicher, Feodor, Dr., Zeppelinstrasse 40, D-1000 Berlin 20(DE)**
Erfinder: **Scherowsky, Günter, Prof. Dr., Winklerstrasse 18B, D-1000 Berlin 33(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 217 239 B1

## Beschreibung

Die Kennlinien der in Flüssigkristall-Displays verwendeten elektro-optischen Effekte verändern sich im allgemeinen mit der Temperatur. Insbesondere bei einer Ansteuerung im Multiplexbetrieb ergeben sich daraus Schwierigkeiten, die zu einer unerwünschten Einschränkung des Arbeitstemperaturbereiches führen können. Bei verschiedenen elektrooptischen Effekten kann durch Zusatz chiraler Verbindungen zum nematischen Flüssigkristall über die Temperaturfunktion der Ganghöhe der dadurch induzierten cholesterischen Helixstruktur die Temperaturabhängigkeit der elektrooptischen Kennlinien vorteilhaft beeinflußt werden, so beim cholesterisch-nematischen Phasenumwandlungseffekt, der TN ("twisted nematic")-Zelle und dem kürzlich vorgestellten SBE ("supertwisted birefringence effect"). Die üblichen bekannten Dotierstoffe induzieren im allgemeinen eine mit zunehmender Temperatur ansteigende Ganghöhe; es sind in jüngster Zeit auch bereits Dotierstoffe beschrieben worden, die diesen oftmals unerwünschten Effekt nicht zeigen.

Aus der DE-C 28 27 47l (= US-A 4 264 l48) ist der Zusatz von zwei unterschiedlichen chiralen Dotierstoffen zu nematischen Trägersubstanzen bekannt; dabei erzeugt der eine chirale Dotierstoff in der nematischen Trägersubstanz eine rechtshändige Verdrillung, der andere eine linkshändige Verdrillung. Mit einer solchen Dotierung wird eine Abnahme der Ganghöhe erreicht, aber es sind zur Erreichung dieses Effekts relativ hohe Gesamtkonzentrationen erforderlich, die zu einer negativen Beeinflussung der anderen Materialparameter führen können.

In der DE-A 33 33 677 werden u.a. Umsetzungsprodukte (Ester) von chiralem Butandiol-(2,3) mit mesogenen Carbonsäuren beschrieben, die bereits in Einzeldotierung in Flüssigkristall-Phasen die Optimierung der Temperaturkompensation vereinfachen können. Diese bekannten Ester weisen aber oftmals ein für bestimmte Anwendungen noch zu niedriges Verdrillungsvermögen auf. Das dem Reziprokwert des Verdrillungsvermögens entsprechende "pc-Produkt" beträgt nach den Angaben in dieser DE-A 9,2 bis ll6 µm•Gew.-%.

Aufgabe der vorliegenden Erfindung ist es deshalb, neue Verbindungen aufzufinden, die bei ihrem Einsatz als chirale Dotierstoffe in Flüssigkristall-Phasen bei verhältnismäßig geringen Zusatzmengen bereits eine Optimierung der Temperaturkompensation und gleichzeitig eine hohe Verdrillung der induzierten Helixstrukturen bewirken.

Die Erfindung geht aus von einem bekannten Ester aus einer chiralen Verbindung mit zwei OH-Gruppen und mindestens einer mesogenen Carbonsäure. Die erfindungsgemäßen Verbindungen sind gekennzeichnet durch die allgemeine Formel (I)

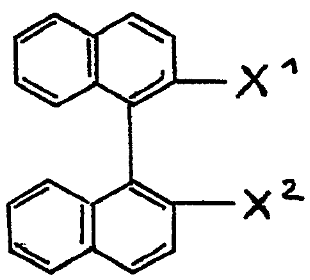

(I)

in der $X^1$= O-H oder O-CO-($C_1$ bis $C_{12}$)Alkyl und $X^2$= O-MC oder $X^1$ und $X^2$ unabhängig voneinander O-MC bedeuten, wobei MC der Molekülrest einer mesogenen Monocarbonsäure nach Abspaltung einer OH-Gruppe ist. Die allgemeine Formel (I) umfaßt die R- und S-Konfigurationen.

Eine weitere Lösung der gestellten Aufgabe ist eine verdrillbare Flüssigkristall-Phase mit einem Gehalt an mindestens einer chiralen Verbindung, die dadurch gekennzeichnet ist, daß sie als chirale Verbindung mindestens eine Verbindung der allgemeinen Formel (I) oder eines im aromatischen Teil des Phenolteils substituierten Phenolesters (entsprechend dieser allgemeinen Formel (I) als unsubstituiertem Grundmolekül) enthält. Unter dem Begriff "verdrillbare Flüssigkristall-Phase" sind nematische, cholesterische, geneigt("tilted")-smektische, insbesondere smektisch C ($S_c$ oder SmC), Phasen zu verstehen.

Die erfindungsgemäßen verdrillbaren Flüssigkristallphasen bestehen aus 2 bis 20, vorzugsweise 2 bis l5 Komponenten, darunter mindestens einem der erfindungsgemäß beanspruchten chiralen Dotierstoffe. Die anderen Bestandteile werden vorzugsweise ausgewählt aus den bekannten Verbindungen mit nematischen, cholesterischen und/oder geneigt-smektischen Phasen, dazu gehören beispielsweise Schiffsche Basen, Biphenyle, Terphenyle, Phenylcyclohexane, Cyclohexylbiphenyle, Pyrimidine, Zimtsäureester, Cholesterinester, verschieden überbrückte, terminal-polare mehrkernige Ester von p-Alkylbenzoesäuren. Im allgemeinen liegen die im Handel erhältlichen Flüssigkristall-Phasen bereits vor der Zugabe des chiralen Dotierstoffes als Gemische verschiedenster Komponenten vor, von denen mindestens eine mesogen ist, d.h. als Verbindung, in derivatisierter Form oder im Gemisch mit bestimmten Cokomponenten eine Flüssigkristall-Phase zeigt [=mindestens eine enantiotrope (Klärtemperatur >Schmelztemperatur) oder monotrope (Klärtemperatur<Schmelztemperatur) Mesophasenbildung erwarten läßt].

Mit Hilfe der neu-entwickelten Verbindungen als Dotierstoff gelingt es bei geringer Menge an Dotierstoff in Flüssigkristall-Phasen eine hohe Verdrillung zu erzielen, wobei einige Verbindungen außerdem eine bei Temperaturänderung im wesentlichen unabhängige Ganghöhe aufweisen, d.h. die Zu- oder Abnahme der Ganghöhe liege im allgemeinen im Bereich von I % bis I‰ pro K. Das Produkt p•c (p= Ganghöhe der induzierten Helixstruktur in µm, c= Konzentration des chiralen Dotierstoffes in Gew.-%) ist, insbesondere bei den Verbindungen, bei denen $X^1$ und $X^2$= O-MC bedeuten, kleiner als 5, bevorzugt liegt es zwischen 0,5 und 4. Ein weiterer Einsatz kann bei der Thermotopographie oder zur Erzeugung von "blue phases" (=cholesterische Systeme mit relativ kleiner Ganghöhe von z.B. weniger als 800 nm) erfolgen. Im allgemeinen induzieren die monoveresterten Verbindungen einen anderen Helixdrehsinn (Verdrillung) als die diveresterten (negative gegenüber positiven Werten), unter bestimmten Umständen kann bei den Diestern aber auch Helixinversion auftreten, dies insbesondere bei solchen Diestern, bei denen $X^1$= O-CO-($C_1$ bis $C_{12}$)Alkyl und $X^2$= O-MC bedeuten.

Unter den Verbindungen der allgemeinen Formel (I) sind die bevorzugt, bei denen der Rest MC [ausgedrückt durch die allgemeine Formel (II)] bedeutet:

$$R - (A^1-)_{n1}(B-)_{n2}(A^2-)_{n3}-CO \quad (II)$$

in der die Symbole folgende Bedeutung haben:
R= ein geradkettiges oder verzweigtes ($C_1$-$C_{12}$)Alkyl, wobei eine oder zwei nicht-benachbarte $CH_2$-Gruppen durch O-Atome ersetzt sein können, oder falls nl=l auch F, Cl, Br oder CN,
$A^1$,$A^2$= unabhängig voneinander I,4-Phenylen, Pyrimidin-2,5-diyl, I,4-Cyclohexylen, I,3-Dioxan-2,5-diyl, I,3-Dithian-2,5-diyl oder I,4-Bicyclo(2,2,2)octylen, wobei diese Gruppen auch mindestens einfach substituiert sein können durch F, Cl, Br, CN und/oder ($C_1$-$C_{12}$)Alkyl (gegebenenfalls sind ein oder zwei nicht-benachbarte $CH_2$-Gruppen durch O-Atome ersetzt),
B = CO-O, O-CO, $CH_2$-$CH_2$, $OCH_2$, $CH_2O$, CH=N, N=CH, N=N, N(O)=N,
n1,,n3= unabhängig voneinander, 0, I oder 2, wobei n1 und n3 nicht gleichzeitig 0 sind, und n2 gleich 0 oder 1 ist.

Unter den Verbindungen sind wiederum die bevorzugt, bei denen die Symbole folgende Bedeutung haben: R=geradkettiges ($C_4$-$C_{10}$)Alkyl, wobei eine $CH_2$- Gruppe durch ein O-Atom ersetzt sein kann, $A^1$,$A^2$= unabhängig voneinander unsubstituiertes I,4-Phenylen oder I,4-Cyclohexylen, B= CO-O, O-CO, nl= I, n2= 0 oder I, n3= I oder 2, $X^1$ und $X^2$= O-MC.

Von der oder den erfindungsgemäßen Dotierstoffen enthalten die Flüssigkristall-Phasen im allgemeinen 0,0l bis 70 Gew.-%, insbesondere 0,05 bis 50 Gew.-%.

## Beispiele und Vergleichsbeispiele

### Beispiele I und 2

Zu I mmol des R-I,I'-Bi-2-napthols in I0 bis 50 ml wasserfreiem Methylenchlorid oder Dimethylformamid werden unter Rühren I0 bis 40 mg Dimethylaminopyridin und I,5 mmol der mesogenen Carbonsäure zugegeben. Bei einer Temperatur von 0°C werden I,5 mmol Dicyclohexylcarbodiimid hinzugefügt, und es wird während I0 min bei dieser Temperatur und dann 20 h bei Raumtemperatur gerührt. Es wird von ausgefallenem Harnstoff abfiltriert, das Filtrat wird im Vakuum eingedampft und der verbleibende Rückstand wird in Methylenchlorid aufgenommen. Nach eventueller Filtration wird das organische Lösemittel abgezogen und der Rückstand an Kieselgel chromatographiert (die Struktur der Verbindungen ist durch spektroskopische Daten und Elementaranalysen gesichert).

(1)

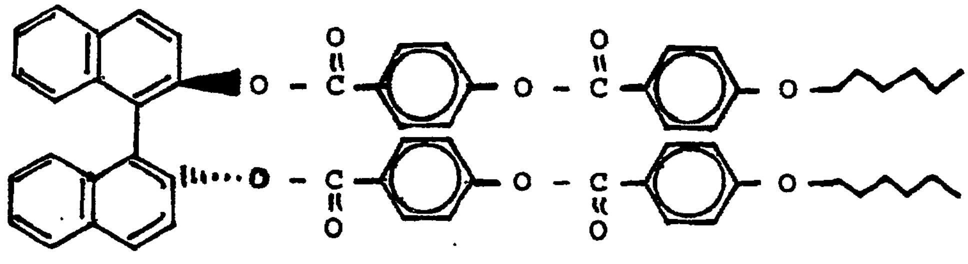

R-I,I'-Bi-2-naphtholdiester der 4-(4-n-Hexyloxy-benzoyloxy)-benzoesäure

(2)

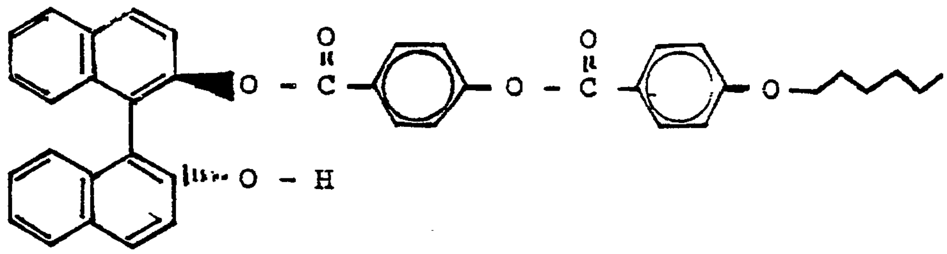

Die Verbindung (I) hat einen Schmelzpunkt von -°C und das Verdrillungsvermögen (ausgedrückt durch p.c) verändert sich zwischen I0 und I00°C von I,9 auf 2,2. Die Verbindung (2) hat einen Schmelzpunkt von I28°C und das Verdrillungsvermögen verändert sich von -6 auf -9. Die Messung des Verdrillungsvermögens wird in einer handelsüblichen nematischen Weitbereichsmischung - "RO-TN 404" der Hoffmann-La Roche Aktiengesellschaft (Basel/Schweiz) - mit einem Klärpunkt von I04°C durchgeführt.

Beispiele 3 und 4

(3)

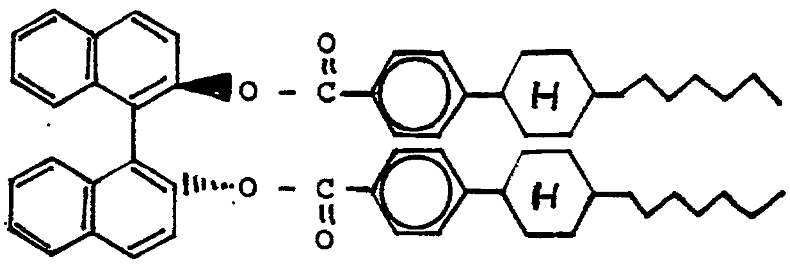

R-I,I'-Bi-2-naphtholdiester der 4-(trans-4-n-Heptyl-cyclohexyl)-benzoesäure

Zu I0 mmol der mesogenen 4-(trans-4-n-Heptyl-cyclohexyl)-benzoesäure werden I00 mmol $SOCl_2$ zugesetzt. Es werden 5 Tropfen Pyridin zugegeben und das Reaktionsgemisch wird während 2h unter Rückfluß erhitzt. Das überschüssige $SOCl_2$ wird abgezogen (abdestilliert). Das entstehende Säurechlorid wird in Pyridin gelöst. Das optisch aktive I,I'-Bi-2-naphthol wird in äquimolarer Menge langsam der Lösung zugesetzt und das Reaktionsgemisch unter Zusatz einer Spatelspitze Dimethylaminopyridin wird danach während 20h unter Rückfluß erhitzt. Das Gemisch wird filtriert, die Lösung eingedampft und über eine Kieselgelsäure gereinigt. Das umkristallisierte Produkt entspricht nach den analytischen Daten (Elementaranalyse, NMR-Spektrum, IR-Spektrum) der angegebenen Formel (3).

Entsprechend wird die nachstehende Verbindung (4) synthetisiert.

(4)

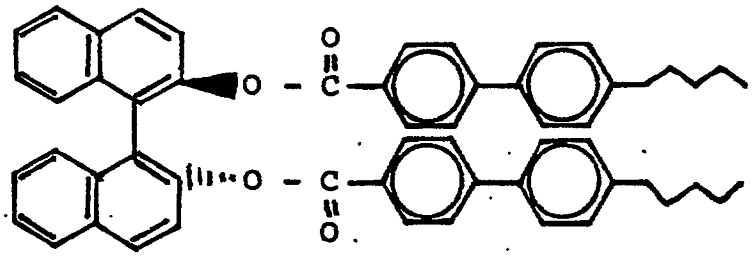

R-I,I'-Bi-2-naphtholdiester der 4'-n-Pentyl-4-diphenylcarbonsäure

Vergleichsbeispiel

(X) 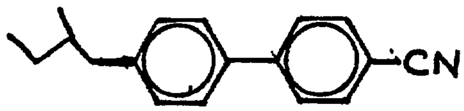

(Y) 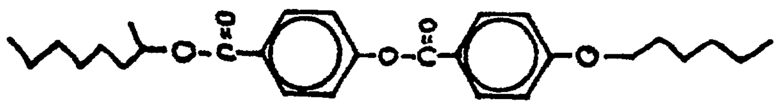

In der Weitbereichsmischung "RO-TN 404" wird je eine der Verbindungen (3) und (4) und zum Vergleich je eine der Verbindungen (X) und (Y) zugesetzt; die Vergleichsverbindungen sind die handelsüblichen chiralen Dotierstoffe "CB I5" von BDH (British Drug House), Poole (GB) und "S 8II" von E. Merck, Darmstadt (DE). In dieser Flüssigkristall-Phase werden dann die Verdrillung in µm•Gew.-% (= p•c) - angegeben bei einer Temperatur von 25°C - und die Temperaturabhängigkeit der Ganghöhe in ‰ pro K bestimmt.

| Verbindung | p•c (µm•Gew.-% bei 25°C) | Temperaturabhängigkeit (‰ pro K) |
|---|---|---|
| 3 | + 1,95 | 1 |
| 4 | + 1,50 | 1 |
| X | + 14 | 4 |
| Y | - 8,5 | 2 |

Beispiele 5 bis 9

Es wird nach den Angaben der Beispiele I und 2 verfahren, aber die Säurekomponente variiert, im Fall des Beispiels 9 wird neben der üblichen mesogenen Säurekomponente eine ($C_2$ bis $C_{13}$)Alkansäure zur Umsetzung gebracht:

(5) 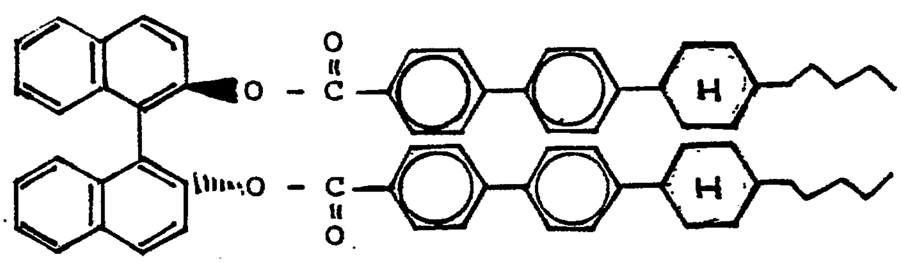

R-I,I'-Bi-2-naphtholdiester der 4'-trans-n-Pentyl-cyclohexyl-4-diphenyl-carbonsäure

(6)

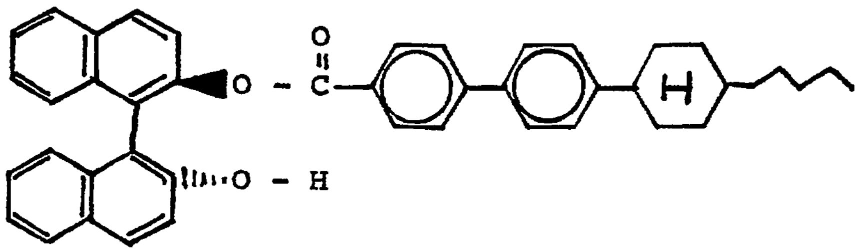

R-l,l'-Bi-2-naphtholmonoester der 4'-trans-n-Pentyl-cyclohexyl-4-diphenyl-carbonsäure

(7)

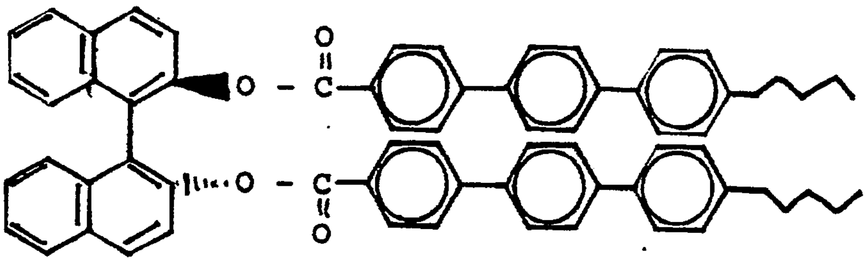

R-l,l'-Bi-2-naphtholdiester der 4"-n-Pentyl-4-terphenyl-carbonsäure

(8)

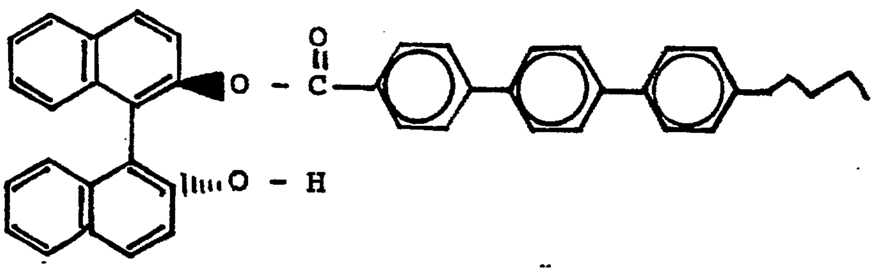

R-l,l'-Bi-2-naphtholmonoester der 4"-n-Pentyl-4-terphenylcarbonsäure

(9)

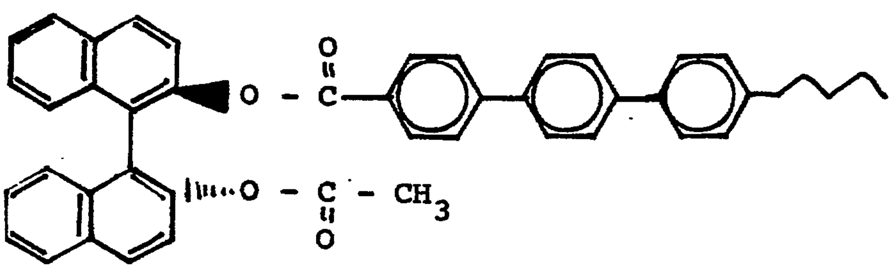

R-l,l'-Bi-2-naphtholdiester der 4'-trans-n-Pentyl-cyclohexyl-4-diphenyl-carbonsäure und der Essigsäure (Ethansäure)

Die Verbindung (5) hat einen Schmelzpunkt von l39 bis l4l°C und das hohe Verdrillungsvermögen (ausgedrückt durch p•c) bei 25°C beträgt +l,38, die Verbindung (6) hat einen Schmelzpunkt von l4l bis l45°C und das Produkt p•c beträgt -5,35; die Werte für p•c der Verbindungen (l7) und (8) betragen +l,58 und -5,00; die Verbindung (9) mit einem Schmelzpunkt von ll9° hat einen Wert p•c von +l85.

Erläuterungen zur Zeichnung

In der anliegenden Zeichnung sind die MTP-Werte in Abhängigkeit von der Temperatur für die vorstehenden Verbindungen I bis 9 aufgetragen.
- MTP ("molecular twisting power"): $\beta = l/p \cdot N_v$ (p = Ganghöhe der induzierten Helixstruktur in m, $N_v$= Konzentration des chiralen Dotierstoffs in mol/$m^3$)

Die erfindungsgemäße Verbindung I zeigt bei einem - wie auch bei den Verbindungen 3, 4, 5 und 7 - hohen MTP-Wert mit zunehmender Temperatur praktisch (über einen bestimmten Temperaturbereich) keine Veränderung dieses Werts (Fig. I und Fig. 3) was bei den ähnlichen disubstituierten Derivaten 3, 4, 5 und 7 in geringem Maß zu beobachten ist. Die Monoester 2, 6 und 8 zeigen dagegen eine Abnahme der MTP-Werte mit steigender Temperatur (Fig. 2 und Fig. 3). Die Verbindung 9 zeigt (siehe Fig. 3 und 4) Helixinversion.

## Patentansprüche

I. Ester aus einer chiralen Verbindung mit zwei OH-Gruppen und mindestens einer mesogenen Carbonsäure, gekennzeichnet durch die allgemeine Formel (I),

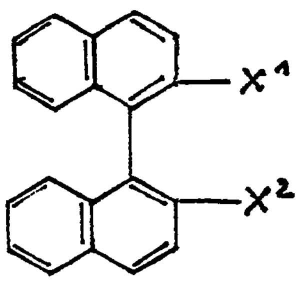

(I)

in der $X^1$ = O-H oder O-CO-($C_1$ bis $C_{12}$)Alkyl und $X^2$ = O-MC oder $X^1$ und $X^2$ unabhängig voneinander O-MC bedeuten, wobei MC der Molekülrest einer mesogenen Monocarbonsäure nach Abspaltung einer OH-Gruppe ist.

2. Verbindungen nach Anspruch I, dadurch gekennzeichnet, daß der Rest MC der mesogenen Carbonsäure in $X^1$, $X^2$ durch die allgemeine Formel (II) ausgedrückt wird

$R - (A^1-)_{n1}(B-)_{n2}(A^2-)_{n3}-CO$ (II)

in der die Symbole folgende Bedeutung haben:
R= ein geradkettiges oder verzweigtes ($C_1$-$C_{12}$)Alkyl wobei eine oder zwei nicht-benachbarte $CH_2$-Gruppen durch O-Atome ersetzt sein können, oder falls nl= I auch F, Cl, Br oder CN
$A^1$,$A^2$= unabhängig voneinander I,4-Phenylen, Pyrimidin-2,5-diyl, I,4-Cyclohexylen, I,3-Dioxan-2,5-diyl, I,3-Dithian-2,5-diyl oder I,4-Bicyclo(2,2,2)octylen, wobei diese Gruppen auch mindestens einfach substituiert sein können durch F, Cl, Br, CN und/oder ($C_1$-$C_{12}$)Alkyl (gegebenenfalls sind ein oder zwei nicht-benachbarte $CH_2$ Gruppen durch O-Atome ersetzt),
B= CO-O, O-CO, $CH_2$-$CH_2$, $OCH_2$, $CH_2O$, CH=N, N=CH, N=N, N(O)=N,
n1,n3= unabhängig voneinander 0, I oder 2, wobei nl und n3 nicht gleichzeitig 0 sind, und n2 gleich 0 oder 1 ist.

3. Verdrillbare Flüssigkristall-Phase mit einem Gehalt an mindestens einer chiralen Verbindung, dadurch gekennzeichnet, daß sie mindestens eine chirale Verbindung gemäß der allgemeinen Formel (I) nach Anspruch I oder eines im aromatischen Teil des Phenolteils substituierten Phenolesters, entsprechend der allgemeinen Formel (I) als unsubstituiertem Grundmolekül enthält.

4. Flüssigkristall-Phase nach Anspruch 3, dadurch gekennzeichnet, daß sie 0,0I bis 70 Gew.-% an mindestens einer der chiralen Verbindungen enthält.

5. Flüssigkristall-Anzeigeelement enthaltend eine Flüssigkristall-Phase nach Anspruch 3.

6. Verwendung einer chiralen Verbindung gemäß der allgemeinen Formel (I) nach Anspruch I zur Temperaturkompensation und Erzeugung einer Verdrillung in Flüssigkristall-Phasen.

7. Verfahren zur Temperaturkompensation und Verdrillung in Flüssigkristall-Anzeigeelementen, die eine Flüssigkristall-Phase enthalten, durch Zusatz von mindestens einer chiralen Verbindung, dadurch gekennzeichnet, daß man der Flüssigkristall-Phase 0,0I bis 70 Gew.-% mindestens eine Verbindung gemäß der allgemeinen Formel (I) nach Anspruch I zusetzt.

## Claims

1. An ester derived from a chiral compound containing two OH groups and at least one mesogenic carboxylic acid which has the general formula (I)

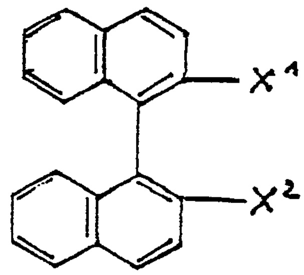

(I)

in which $X^1$ = O-H or O-CO-($C_1$ to $C_{12}$)alkyl and $X^2$ = O-MC or $X^1$ and $X^2$ denote O-MC independently of each other, MC being the molecular radical of a mesogenic monocarboxylic acid after splitting off an OH group.

2. The compound as claimed in claim 1, wherein the MC radical of the mesogenic carboxylic acid in $X^1$, $X^2$ is expressed by the general formula (II)

$R-(A^1)_{n1}-(B-)_{n2}(A^2-)_{n3}-CO$ (II)

in which the symbols have the following meaning:
R = a straight-chain or branched ($C_1$-$C_{12}$)alkyl, where one or two nonadjacent $CH_2$ groups may be replaced by 0 atoms, or if n1 = 1, also F, C1, Br or CN,
$A^1$, $A^2$ = independently of each other, 1,4-phenylene, pyrimidine-2,5-diyl, 1,4-cyclohexylene, 1,3-dioxane-2,5-diyl, 1,3-dithiane-2,5-diyl or 1,4-bicyclo-(2.2.2)octylene, where these groups may also be at least singly substituted by F, Cl, Br, CN and/or ($C_1$-$C_{12}$)alkyl (one or two non-adjacent $CH_2$ groups are optionally replaced by 0 atoms),
B = CO-O, O-CO, $CH_2$-$CH_2$, $OCH_2$, $CH_2O$, CH=N, N=CH, N=N, N(O)=N,
n1, n3 = independently of each other, 0, 1 or 2, n1 and n3 not being 0 at the same time and n2 being 0 or 1.

3. A twistable liquid crystal phase containing at least one chiral compound, wherein the phase contains at least one chiral compound according to the general formula (I) as claimed in claim 1 or a phenolic ester, substituted in the aromatic part of the phenolic part, corresponding to the general formula (I) as an unsubstituted basic molecule.

4. The liquid crystal phase as claimed in claim 3, wherein the phase contains 0.01 to 70% by weight of at least one of the chiral compounds.

5. A liquid crystal display element containing a liquid crystal phase as claimed in claim 3.

6. The use of a chiral compound according to the general formula (I) as claimed in claim 1 for temperature compensation and production of twisting in liquid crystal phases.

7. A process for temperature compensation and twisting in liquid crystal display elements, which contain a liquid crystal phase, by addition of at least one chiral compound, which comprises adding 0.01 to 70% by weight of at least one compound according to the general formula (I) as claimed in claim 1 to the liquid crystal phase.

## Revendications

1. Ester d'un composé chiral comportant deux groupes OH et au moins un acide carboxylique mésogène, caractérisé par la formule générale (I)

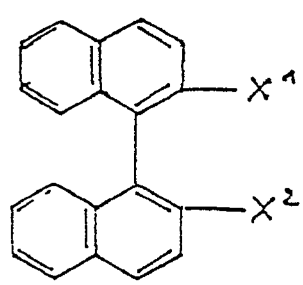

(I)

dans laquelle $X^1$ = O-H ou O-CO-(alkyle en $C_1$ à $C_{12}$) et $X^2$ = O-MC, ou encore $X^1$ et $X^2$, indépendamment l'un de l'autre, représentent chacun O-MC, MC étant le résidu de la molécule d'un acide carboxylique mésogène après dissociation d'un groupe OH.

2. Composés selon la revendication 1, caractérisés en ce que le radical MC de l'acide carboxylique mésogène, dans $X^1$ et $X^2$, est exprimé par la formule générale (II) ci-après:

$R = (A^1-)_{n1}(B-)_{n2}(A^2-)_{n3}-CO$ (II)

où les symboles ont les significations suivantes:
R est un radical alkyle en $C_1$ à $C_{12}$ à chaîne droite ou ramifiée, un ou deux groupes $CH_2$ non voisins pouvant être remplacés par des atomes d'oxygène, ou encore, quand n1= 1, par F, Cl, Br ou CN,
$A^1$ et $A^2$, indépendamment l'un de l'autre, représentent chacun des radicaux phénylène-1,4, pyridimínediyle-2,5, cyclohexylène-1,4, dioxanne-1,3 diyle-2,5, dithianne-1,3 diyle-2,5, ou bicyclo(2,2,2) octylène-1,4, ces groupes pouvant aussi être substitués au moins une fois par F, Cl, Br, CN et/ou un radical alkyle en $C_1$-$C_{12}$ (éventuellement, un ou deux groupes $CH_2$ non voisins sont remplacés par des atomes d'oxygène),
B = CO-O, O-CO, $CH_2$-$CH_2$, $OCH_2$, $CH_2O$, CH=N, N=CH, N=N, N(O)=N,
n1 et n3, indépendamment l'un de l'autre, valent chacun 0,1 ou 2, n1 et n3 n'étant pas simultanément nuls, et n2 valant 0 ou 1.

3. Phase mésomorphe torsadable, contenant au moins un composé chiral, caractérisée en ce qu'elle contient au moins un composé chiral selon la formule générale (I) de la revendication 1 ou d'un ester phénolique substitué dans la partie aromatique de la partie phénol, correspondant à la formule générale (I) en tant que molécule de base nonsubstituée.

4. Phase mésomorphe selon la revendication 3, caractérisée en ce qu'elle contient de 0,01 à 70% en poids d'au moins l'un des composés chiraux.

5. Elément d'affichage à cristaux liquides contenant une phase mésomorphe selon la revendication 3.

6. Utilisation d'un composé chiral selon la formule générale (I) selon la revendication 1 pour assurer la compensation de température et produire une torsion dans des phases mésomorphes.

7. Procédé pour la compensation de températures et la torsion dans des éléments d'affichage à cristaux liquides contenant une phase mésomorphe, par addition d'au moins un composé chiral, caractérisé en ce qu'on ajoute à la phase mésomorphe de 0,01 à 70% en poids d'au moins un composé selon la formule générale (I) de la revendication 1.

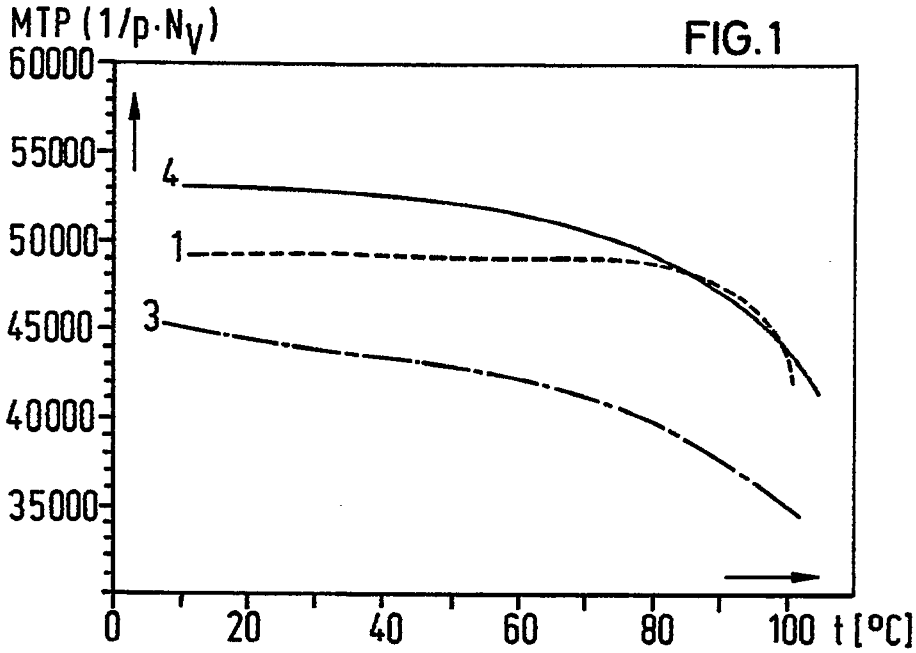
MTP (1/p·N_V)
60000
55000
50000
45000
40000
35000
4
1
3
0
20
40
60
80
100
t [°C]

FIG.1

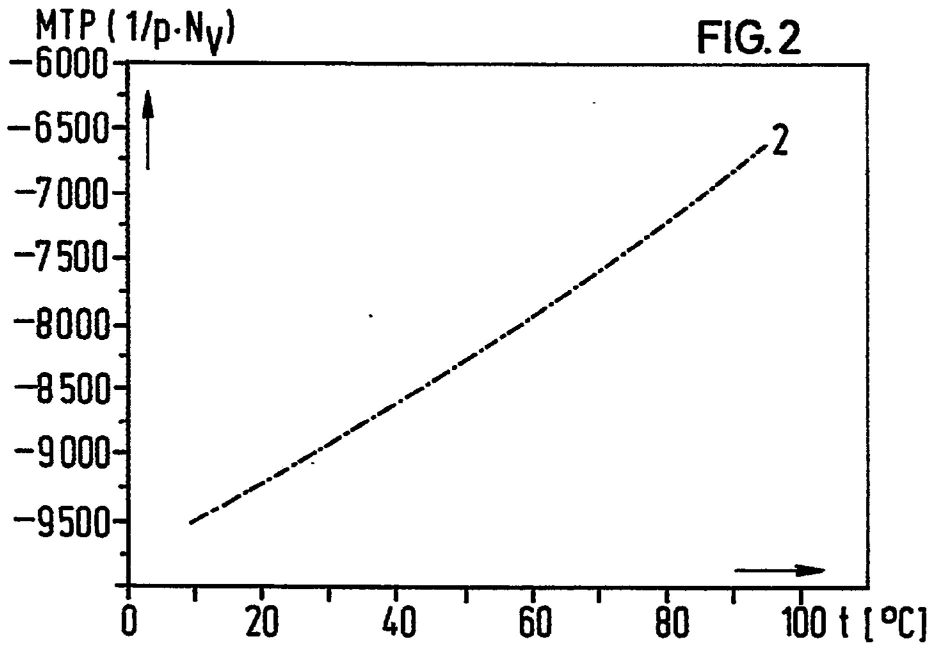
MTP (1/p·N_V)
-6000
-6500
-7000
-7500
-8000
-8500
-9000
-9500
2
0
20
40
60
80
100
t [°C]

FIG.2

FIG. 3

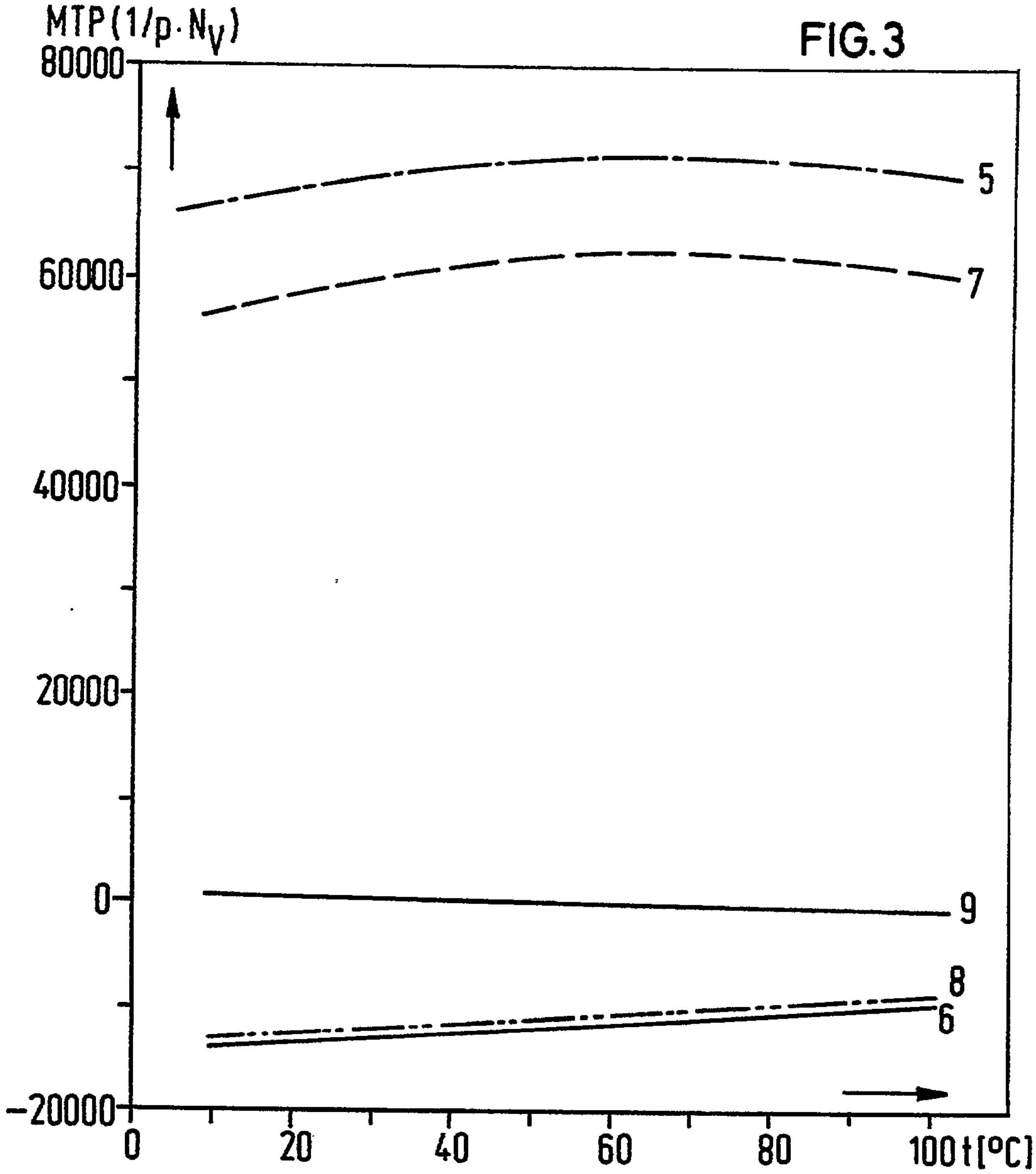
MTP (1/p·N_V)
80000
60000
40000
20000
0
-20000
5
7
9
8
6
0
20
40
60
80
100 t [°C]

FIG. 4

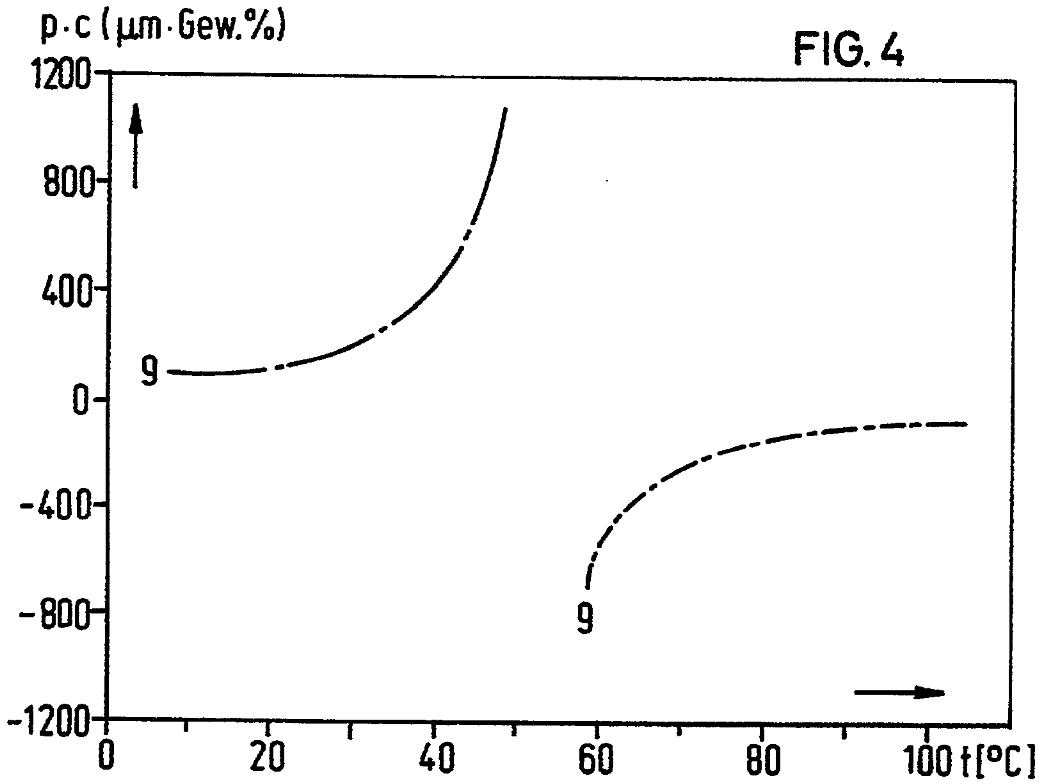
p·c (µm·Gew.%)
1200
800
400
0
-400
-800
-1200
9
9
0
20
40
60
80
100 t[°C]

FIG. 5

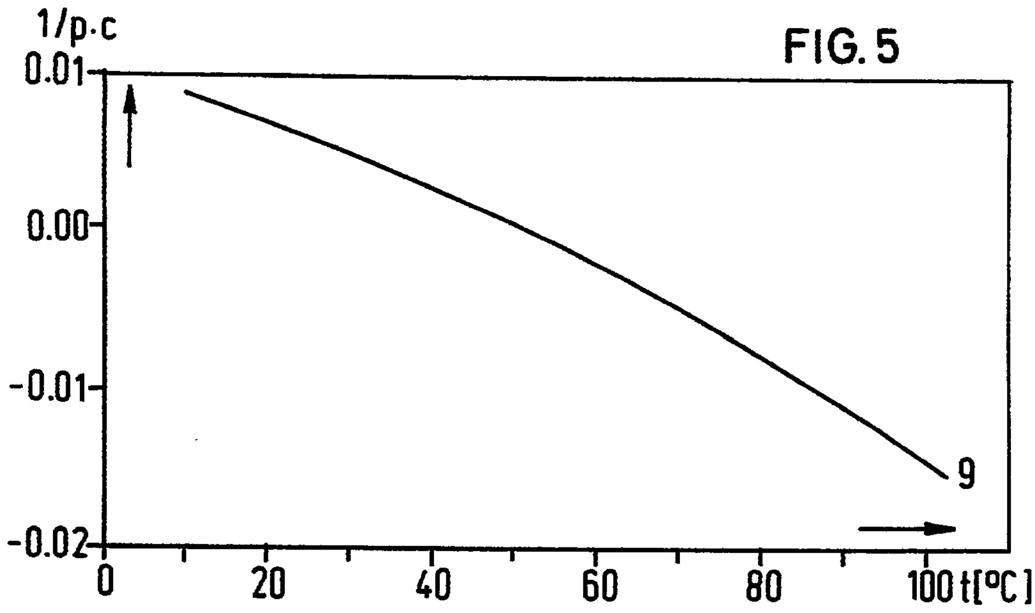
1/p·c
0.01
0.00
-0.01
-0.02
9
0
20
40
60
80
100 t[°C]